# FASCICULE DE BREVET EUROPEEN

(11) **EP 3 085 925 B1**
(45) Date de publication et mention de la délivrance du brevet: **23.11.2022**
(21) Numéro de dépôt: 16164087.5
(22) Date de dépôt: 06.04.2016
(51) Int. Cl.: F02C 7/047

(54) **BEC DE SEPARATION DEGIVRANT DE COMPRESSEUR DE TURBOMACHINE AXIALE**
ENTEISENDER TRENNUNGSSCHNABEL EINES KOMPRESSORS EINER AXIALEN TURBOMASCHINE
DE-ICING SPLITTER LIP FOR AXIAL TURBOMACHINE COMPRESSOR

(30) Priorité: 20.04.2015 BE 201505255
(43) Date de publication de la demande: 26.10.2016
(73) Titulaire: Safran Aero Boosters SA, 4041 Herstal (BE)
(72) Inventeur: BOUILLON, David, 1200 Woluwe-Saint-Lambert (BE); HERBAUT, M. Ghislain, 4257 Berloz (BE)
(74) Mandataire: Lecomte & Partners

(56) Documents cités:
- EP-A1- 1 318 283
- EP-A1- 2 740 905
- EP-A2- 1 942 249
- RU-C1- 2 083 441

## Description

### Domaine technique

L'invention concerne le domaine du dégivrage de turbomachine. Plus précisément, l'invention a trait à un bec de séparation de turbomachine axiale. L'invention traite également d'une turbomachine axiale munie d'un bec de séparation dégivrant.

### Technique antérieure

Les turbopropulseurs multi-flux sont développés pour respecter l'environnement. Le respect de l'environnement s'entend ici comme une limitation des nuisances sonores, tout comme la diminution de consommation. Dans l'optique d'optimiser leur poussée et leur rendement tout en réduisant les nuisances sonores, les turbopropulseurs travaillent avec plusieurs flux d'airs annulaires. Généralement, une turbomachine sépare un flux entrant en un flux primaire et en un flux secondaire ; ces deux derniers ont des formes de manches annulaires. Le flux primaire emprunte les compresseurs, une chambre de combustion, puis est détendu dans des turbines. Le flux secondaire contourne par l'extérieur le compresseur, la chambre de combustion, la turbine ; et regagne ensuite le flux primaire en sortie du turboréacteur. Les flux sont séparés par un bec de séparation circulaire placé en amont du compresseur, sa géométrie limite l'entrée d'air dans le compresseur.

L'air entrant dans la turbomachine reste à température atmosphérique au niveau du bec de séparation. Ces températures pouvant descendre à - 50°C en altitude, de la glace peut se former sur le bec avec l'humidité. En cours de vol, cette glace peut s'étendre et s'accumuler jusqu'à former des blocs en tête d'aubes statoriques du compresseur. Ces blocs peuvent aussi modifier la géométrie du bec et influer sur le flux d'air entrant dans le compresseur, ce qui peut en réduire le rendement.

A force de se développer, les blocs peuvent devenir particulièrement massifs, puis se détacher en raison des vibrations de la turbomachine. En raison du flux entrant, ces blocs peuvent être ingérés par le compresseur, risquant au passage de dégrader les aubes rotoriques. Cette ingestion est particulièrement pénalisante tant elle ne subit pas au préalable un passage dans la soufflante. Pour limiter cette formation de glace, les becs de séparation sont munis d'un dispositif de dégivrage.

Le document EP 1 942 249 A2 divulgue un bec de séparation de turbomachine axiale munie d'une soufflante. Le bec de séparation comprend un système de dégivrage avec un réseau de tuyaux couplés à une source chaude. Les tuyaux sont en contact de la lèvre de séparation, ils y sont maintenus grâce à l'aide de supports. Du matériau silicone est placé entre le support et les tuyaux de sorte à procurer un effet amortissant de sorte à isoler les tuyaux des vibrations. Or, la conduction thermique n'est pas optimale entre la lèvre et les tuyaux, si bien que le phénomène de dégivrage est pénalisé.

Le document EP 2 740 905 A1 divulgue un bec de séparation de compresseur de turbomachine axiale. Le bec de séparation présente un dispositif dégivrant de sa lèvre amont. Un tube est maintenu en amont de la paroi de séparation du bec de séparation au moyen de bandes métalliques. Or, cette configuration expose le tube aux ingestions puisqu'il n'est pas protégé à l'intérieur de la paroi. Le tube risque donc de se dégrader lors du fonctionnement de la turbomachine.

### Résumé de l'invention

### Problème technique

L'invention a pour objectif de résoudre au moins un des problèmes posés par l'art antérieur. Plus précisément, l'invention a pour objectif d'améliorer l'échange thermique entre la paroi de séparation et les tuyaux chauffants. L'invention a également pour objectif d'améliorer le maintien et le positionnement des tuyaux chauffants dans le bec de séparation.

### Solution technique

L'invention a pour objet un bec de séparation de turbomachine selon la revendication 1.

Selon un mode avantageux de l'invention, le au moins un élément élastique et les moyens chauffants longent le bord d'attaque de sorte à plaquer les moyens chauffants le long, éventuellement tout le long, du bord d'attaque, préférentiellement de manière continue.

Selon un mode avantageux de l'invention, le au moins un élément élastique est comprimé axialement et/ou radialement.

Selon un mode avantageux de l'invention, le au moins un élément élastique est circulaire ; ou le bec comprend plusieurs éléments élastiques en forme d'arcs de cercle, lesdits éléments élastiques étant placés bout-à-bout de sorte à décrire un cercle.

Selon un mode avantageux de l'invention, les moyens chauffants décrivent un cercle ; ou les moyens chauffants forment des arcs de cercles disposés bout à bout de sorte à décrire un cercle.

Selon un mode avantageux de l'invention, le bec de séparation comprend une rangée annulaire d'aubes statoriques supportées par la virole externe.

Selon un mode avantageux de l'invention, les moyens chauffants sont en contact de la virole externe, préférentiellement les moyens chauffants entourent la virole externe et éventuellement la rangée d'aubes.

Selon un mode avantageux de l'invention, le au moins un élément élastique est comprimé radialement entre la paroi de séparation et la virole externe de sorte à plaquer radialement les moyens chauffants contre la virole externe.

Selon un mode avantageux de l'invention, la virole externe et la paroi de séparation forment une gorge annulaire s'étendant axialement vers l'aval, les moyens chauffants étant placés au fond amont de ladite gorge, et/ou les moyens chauffants sont en contact de la virole externe et de la paroi de séparation.

Selon un mode avantageux de l'invention, la virole externe comprend un matériau composite, préférentiellement à matrice organique.

Selon un mode avantageux de l'invention, les moyens chauffants comprennent un corps profilé.

Selon un mode avantageux de l'invention, les moyens chauffants comprennent une nappe chauffante épousant la paroi de séparation, et éventuellement la virole externe, préférentiellement la nappe chauffante comprend une portion plaquée contre la paroi de séparation, et une portion plaquée contre la virole externe.

Selon un mode avantageux de l'invention, le au moins un élément élastique comprend un matériau élastomère et/ou forme un bloc de matière élastique.

Selon un mode avantageux de l'invention, le bec de séparation comprend une cavité annulaire qui est généralement comblée par le au moins un élément élastique et par les moyens chauffants, préférentiellement la cavité est essentiellement comblée par le au moins un élément élastique.

Selon un mode avantageux de l'invention, le bec de séparation comprend des moyens de verrouillage réversibles maintenant en position les moyens chauffants, éventuellement les moyens de verrouillage sont les moyens de poussée.

Selon un mode avantageux de l'invention, les moyens chauffants et/ou le au moins un élément élastique peuvent former une étanchéité et/ou un obturateur, éventuellement entre la virole externe et la paroi de séparation et/ou entre eux.

Selon un mode avantageux de l'invention, la paroi de séparation comprend un profil de révolution avec une surépaisseur en amont, préférentiellement le bord d'attaque est formé sur ladite surépaisseur.

Selon un mode avantageux de l'invention, la virole externe comprend un crochet annulaire de fixation sur la paroi de séparation.

Selon un mode avantageux de l'invention, la paroi de séparation comprend une surface annulaire de réception des moyens chauffants, le au moins un élément élastique plaquant les moyens chauffants contre la surface de réception ; éventuellement la surface de réception est orientée axialement vers l'aval et/ou radialement vers l'intérieur.

Selon un mode avantageux de l'invention, les moyens chauffants comprennent une piste électrique, notamment avec des conducteurs électriques résistifs.

Selon un mode avantageux de l'invention, le au moins un élément élastique est comprimé contre les moyens chauffants de sorte à plaquer les moyens chauffants contre la paroi de séparation et éventuellement contre la virole externe.

Selon un mode avantageux de l'invention, le au moins un élément élastique est comprimé de sorte que sa longueur et/ou son épaisseur soit diminuée(s) d'au moins 0,10 %, préférentiellement d'au moins 0,50 %, plus préférentiellement d'au moins 2,00%, éventuellement d'au moins 5,00%.

L'invention a également pour objet une turbomachine comprenant un bec de séparation dégivrant, remarquable en ce que le bec de séparation est conforme à l'invention.

L'invention a également pour objet une méthode d'assemblage d'un bec de séparation dégivrant de turbomachine selon la revendication 11.

Selon un mode avantageux de l'invention, pendant l'assemblage, les moyens chauffants sont placés dans le bec de séparation avant le au moins un élément élastique.

Selon un mode avantageux de l'invention, pendant l'assemblage, le au moins un élément élastique est introduit dans le bec de séparation puis comprimé, et demeure comprimé dans l'état monté du bec de séparation.

Selon un mode avantageux de l'invention, pendant l'assemblage, les moyens chauffants et/ou le au moins un élément élastique est/sont introduit(s) axialement vers l'amont.

Selon un mode avantageux de l'invention, lors de l'assemblage, l'élément élastique exerce un effort s'opposant à son introduction dans la paroi de dégivrage.

De manière générale, les modes avantageux de chaque objet de l'invention sont également applicables aux autres objets de l'invention.

### Avantages apportés

L'invention permet de plaquer les moyens chauffants contre la surface de réception de la paroi de séparation. Le risque qu'il y ait un vide d'air entre les moyens chauffants et la paroi est limité ou supprimé, ce qui améliore la conduction thermique. L'invention apporte le même bénéfice pour ce qui est de la virole externe.

L'élément élastique longe et épouse les moyens chauffants, si bien qu'il applique un effort de plaquage réparti et homogène sur les moyens chauffants. Ces derniers sont donc soumis à une pression régulière, et non à des pics de pressions créés par des points durs qui risqueraient de les détériorer. De ce fait, ils peuvent être allégés puisque leur robustesse sera moins sollicitée.

L'invention préserve les capacités de dégivrage du bec de séparation en cas d'ingestion, de choc. En effet, dans le scénario d'un impact déformant la paroi de séparation, l'élément élastique continue de plaquer les moyens chauffants. Il offre en outre une capacité d'absorption de l'énergie du choc. L'élément élastique reste efficace pour des déformations de grande ampleur, ce qui augmente la sécurité de fonctionnement de la turbomachine.

La configuration de l'invention permet un montage des moyens chauffants en les maintenant essentiellement grâce à l'élément élastique. L'assemblage est auto-stable. Ce mode de fixation est réversible. En cas d'endommagement, le remplacement est simplifié. Puisque les moyens chauffants peuvent être sectorisés, il devient possible d'en remplacer juste une portion en ne démontant qu'un seul arc d'élément élastique.

### Brève description des dessins

La figure 1 représente une turbomachine axiale selon l'invention.
La figure 2 est un schéma d'un compresseur de turbomachine selon l'invention.
La figure 3 illustre un bec de séparation selon un premier exemple.
La figure 4 illustre un bec de séparation selon un premier mode de réalisation de l'invention.
La figure 5 illustre un bec de séparation selon un deuxième mode de réalisation de l'invention.

### Description des modes de réalisation

Dans la description qui va suivre, les termes intérieur ou interne et extérieur ou externe renvoient à un positionnement par rapport à l'axe de rotation d'une turbomachine axiale. La direction axiale correspond à la direction le long de l'axe de rotation de la turbomachine.

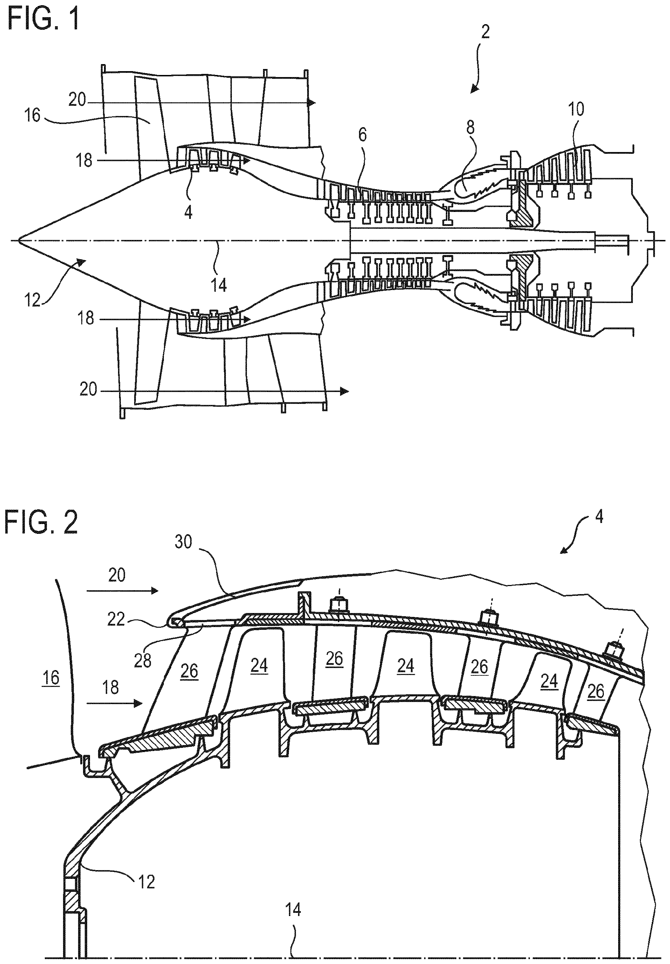

La figure 1 représente de manière simplifiée une turbomachine axiale. Il s'agit dans ce cas précis d'un turboréacteur double-flux. Le turboréacteur 2 comprend un premier niveau de compression, dit compresseur basse pression 4, un deuxième niveau de compression, dit compresseur haute pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8. Des moyens de démultiplication peuvent augmenter la vitesse de rotation transmise aux compresseurs.

Un ventilateur d'entrée communément désigné fan ou soufflante 16 est couplé au rotor 12 et génère un flux d'air qui se divise en un flux primaire 18 traversant les différents niveaux susmentionnés de la turbomachine, et un flux secondaire 20 traversant un conduit annulaire (partiellement représenté) le long de la machine pour ensuite rejoindre le flux primaire en sortie de turbine. Le flux secondaire peut être accéléré de sorte à générer une réaction de poussée. Les flux primaire 18 et secondaire 20 sont des flux annulaires, ils sont canalisés par le carter de la turbomachine. A cet effet, le carter présente des parois cylindriques ou viroles qui peuvent être internes et externes.

La figure 2 est une vue en coupe d'un compresseur d'une turbomachine axiale telle que celle de la figure 1. Le compresseur peut être un compresseur basse pression 4. On peut y observer une partie du fan 16 et le bec de séparation 22 du flux primaire 18 et du flux secondaire 20. Le rotor 12 comprend plusieurs rangées d'aubes rotoriques 24, en l'occurrence trois.

Le compresseur basse pression 4 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression statique.

Le bec de séparation 22 délimite circonférentiellement et/ou axialement l'entrée du compresseur 4. Il peut comprendre une virole externe 28 et une paroi annulaire externe de séparation 30 qui peuvent être realisées à l'aide de matériaux polymères, tels des matériaux composites à matrices organiques pour réduire la masse. Les aubes statoriques 26 s'étendent essentiellement radialement depuis la virole externe 28 à laquelle elles sont jointes.

Afin d'éviter la formation de givre ou d'une couche de glace sur le bec de séparation 22, celui-ci est doté ou associé à un système de dégivrage. Ce dernier permet de réchauffer le bec de séparation 22 afin d'éviter que du givre ne s'y forme et ne s'y accumule ; et/ou afin de faire fondre une couche de givre qui y serait préalablement accumulée.

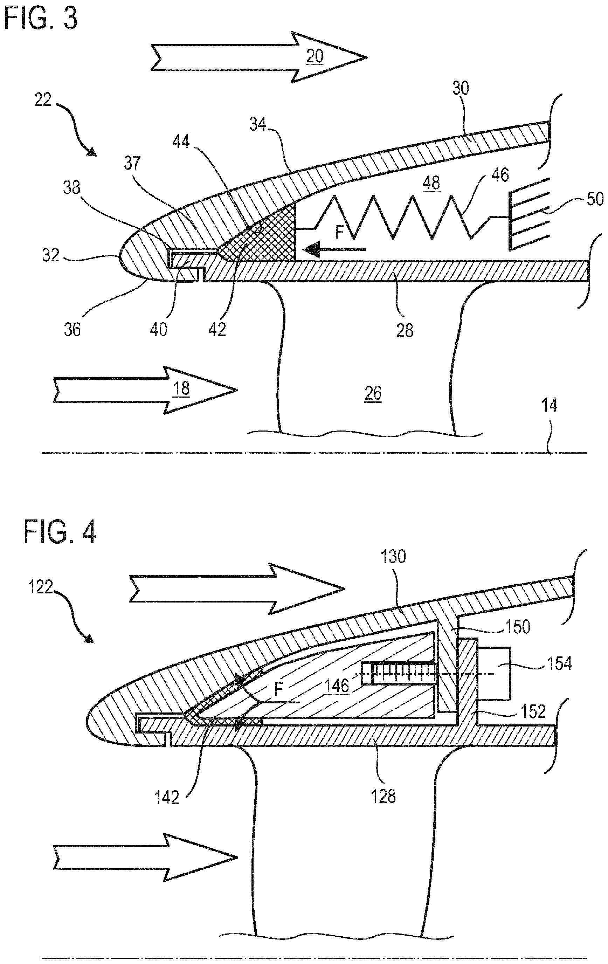

La figure 3 représente un bec de séparation 22 selon un premier exemple non couvert par les revendications. Il permet de séparer le flux primaire 18 du flux secondaire 20, l'axe de rotation 14 est présenté en guise de repère.

La paroi de séparation 30 est annulaire avec un profil de révolution, elle permet de couper au moins un flux annulaire à partir du flux entrant dans la turbomachine. En l'occurrence il délimite le flux primaire 18 du flux secondaire 20 grâce à son bord d'attaque 32 circulaire. La paroi de séparation 30 présente une surface de séparation externe 34 en contact du flux secondaire 20 et une surface de séparation interne 36 en contact du flux primaire 18. Ces surfaces de séparation se rejoignent au niveau du bord d'attaque 32.

La paroi de séparation 30 présente un épaississement 37 amont sur lequel est formé le bord d'attaque 32. Elle présente en outre une fente annulaire 38 de fixation permettant la fixation de la virole externe 28. Celle-ci montre d'ailleurs un crochet annulaire 40 en amont qui est introduit dans la fente de fixation 38. L'épaississement 37 améliore la résistance du bord d'attaque 32 en cas d'ingestion, il en limite les déformations. Il préserve également la fixation de la virole externe 28 en cas d'impact. Au niveau du bord d'attaque 32, le rayon R du profil de révolution des surfaces de séparation est inférieur à 100 mm, préférentiellement inférieur à 30 mm, plus préférentiellement inférieur ou égal à 5,00 mm.

Le système de dégivrage du bec de séparation 22 comprend des moyens chauffants 42. Les moyens chauffants 42 peuvent être un corps de matière chauffée ; grâce à une circulation d'un fluide caloporteur ou grâce à une alimentation électrique. Ils peuvent être des tuyaux d'un circuit de circulation d'huile de la turbomachine. Les moyens chauffants 42 peuvent épouser une surface correspondante formée sur la paroi de séparation, telle une surface de réception 44. Les moyens chauffants 42 peuvent masquer et/ou obturer le passage via la fente de fixation 38, optionnellement de manière étanche. Ils peuvent également épouser une surface externe de la virole externe 28, et éventuellement sa forme de marche annulaire. Ils peuvent être placés axialement au niveau des bords d'attaque des aubes statoriques 26 d'une rangée portée par la virole 28.

Afin de soigner le contact thermique entre les moyens chauffants 42 et la paroi de séparation 30, le bec de séparation 22 comprend au moins un élément élastique 46 précontraint, notamment par compression. L'élément élastique 46 est précontraint pour assurer un plaquage des moyens chauffants 42 contre la paroi de séparation 30. L'élément élastique 46 est comprimé axialement, si bien qu'il pousse axialement les moyens chauffants 42 vers l'amont dans une gorge annulaire 48 façonnée entre la virole externe 28 et la paroi de séparation 30.

L'élément élastique 46 peut être un ressort, par exemple circulaire et/ou métallique. Il peut parcourir le tour du bec de séparation 22. Il peut être une bague décrivant des vagues axialement. En remplacement ou en complément, le bec de séparation 22 peut comprendre une série d'éléments élastiques 46 formant des arcs de cercles. Ces derniers sont placés bout-à-bout pour décrire un cercle. Chaque élément élastique 46 prend appui contre un support 50 quelconque, par exemple formé sur la paroi de séparation 30 et/ou la virole externe 28, et/ou sur toute autre butée disposée en aval.

La figure 4 représente un bec de séparation 122 selon le premier mode de réalisation de l'invention. Cette figure 4 reprend la numérotation des figures précédentes pour les éléments identiques ou similaires, la numération étant toutefois incrémentée de 100. Des numéros spécifiques sont utilisés pour les éléments spécifiques à ce mode de réalisation. La paroi de séparation 130 et de la virole externe 128 peuvent être généralement identiques au premier exemple.

Les moyens chauffants 142 peuvent être une nappe chauffante, telle une couverture chauffante, qui est plaquée à l'intérieur du bec de séparation 122 entre la paroi de séparation 130 et la virole externe 128. Les moyens chauffants 142 peuvent comprendre un circuit électrique chauffant, avec des pistes résistives entremêlées.

Le système de dégivrage comprend un élément élastique 146 formant un bloc, éventuellement plein, de matière élastique. Il peut comprendre un matériau élastomère. L'élément élastique 146 épouse la forme de coin modelée par les moyens chauffants 142. Il est précontraint, comprimé. Il exerce une force F de maintien et une pression de plaquage. Dans cette configuration, il écarte radialement deux portions annulaires des moyens chauffants 142, l'une étant plaquée contre la paroi de séparation 130, l'autre contre la surface externe de la virole externe 128. L'élément élastique 146 est donc comprimé et précontraint radialement.

L'élément élastique 146 peut être en appui contre la bride interne de fixation 150 de la paroi de séparation 130 et/ou contre la bride externe de fixation 152 de la virole externe 128. Ces dernières étant éventuellement annulaires et/ou fixées l'une à l'autre. Le bec de séparation 122 peut comprendre des moyens de poussée 154 qui coopèrent avec l'élément élastique 146 de sorte à y exercer un effort axial de précontrainte. Ces moyens de poussée 154 peuvent être réglables, progressifs et réversibles. Ils peuvent permettre la fixation des brides (150 ; 152), en plus du verrouillage en position de l'élément élastique 146.

Lors de l'assemblage du bec de séparation 122, la virole externe 128 et les moyens chauffants 142 sont mis en place. Ensuite, l'élément élastique 146 est introduit de sorte à recouvrir les moyens chauffants 142. Il est alors écrasé axialement pour plaquer les moyens chauffants 142 contre la paroi 130 et la virole 128. Son extrémité amont devient alors pincée radialement. Il est remarquable que l'assemblage qui vient d'être décrit peut être réalisé indépendamment de la présence de la virole externe.

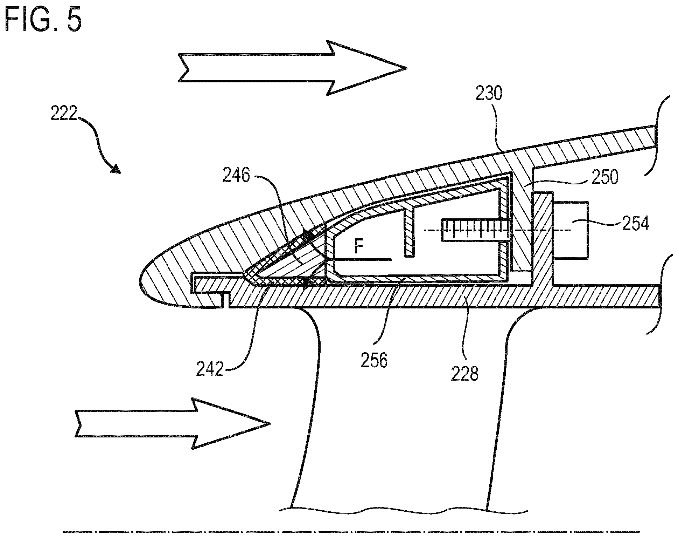

La figure 5 représente un bec de séparation 222 selon le deuxième mode de réalisation de l'invention. Cette figure 5 reprend la numérotation des figures précédentes pour les éléments identiques ou similaires, la numération étant toutefois incrémentée de 200. Des numéros spécifiques sont utilisés pour les éléments spécifiques à ce mode de réalisation. La paroi de séparation 230 et de la virole externe peuvent être généralement identiques aux modes de réalisation précédents.

Les moyens chauffants 242 peuvent être identiques à ceux décrits à la figure 4. L'élément élastique 246 forme un cordon inséré dans les moyens chauffants 242. Le bec de séparation 222 comprend une cale 256 disposée contre l'élément élastique 246 et un support aval, en l'occurrence la bride 250 de la paroi de séparation 230. La cale 256 forme une entretoise annulaire qui procure une surface d'appui rapprochée. Les moyens de poussée 254 peuvent coopérer avec la cale 256, et rester à distance de l'élément élastique 246. Par ce biais, le bec 222 est allégé.

Lors de l'assemblage du bec de séparation 222, l'élément élastique 246 est placé à l'intérieur des moyens chauffants 242. Puis la cale 256 peut être plaquée contre l'élément élastique 246 pour le comprimer si bien qu'il exerce une force F de plaquage contre les moyens chauffants. Ces derniers épousent alors la paroi de séparation 230, ou toute autre portion qu'ils peuvent dégivrer. Ensuite, les moyens de poussée 254 peuvent être réglés pour moduler la compression de l'élément élastique 246, et donc l'effet de plaquage des moyens chauffants 242 sur la paroi de séparation 230.

## Revendications

1. Bec de séparation (122 ; 222) de turbomachine (2), notamment de compresseur (4 ; 6) de turbomachine axiale (2), le bec (122 ; 222) comprenant :
- une paroi de séparation annulaire (130 ; 230) avec un bord d'attaque circulaire (32), et une bride interne annulaire de fixation (150 ; 250) ;
- une virole externe (128,228) avec une bride externe de fixation (152) ;
- des moyens chauffants (142 ; 242) configurés pour pouvoir dégivrer le bec de séparation (122 ; 222);
- au moins un élément élastique (146 ; 246) maintenant les moyens chauffants (142 ; 242) à l'intérieur de la paroi de séparation (30 ; 130 ; 230);
**caractérisé en ce que**
le bec de séparation (122, 222) comprend des moyens de poussée (154, 254) exerçant un effort de compression contre le au moins un élément élastique (146 ; 246) de sorte à le précontraindre, les moyens de poussée (154 ; 254) étant réglables de sorte à régler l'effort de compression et fixés à la bride interne (150, 250) et à la bride externe (152) ; le au moins un élément élastique (146 ; 246) étant précontraint dans le bec de séparation (122 ; 222) de sorte à exercer une force F de plaquage sur les moyens chauffants (142 ; 242) vers la paroi de séparation (130 ; 230).

2. Bec de séparation (122 ; 222) selon la revendication 1, **caractérisé en ce que** le au moins un élément élastique (146 ; 246) et les moyens chauffants (142 ; 242) longent le bord d'attaque (32) de sorte à plaquer les moyens chauffants (142 ; 242) le long, éventuellement tout le long, du bord d'attaque (32), préférentiellement de manière continue.

3. Bec de séparation (122 ; 222) selon l'une des revendications 1 à 2, **caractérisé en ce que** le au moins un élément élastique (146 ; 246) est circulaire ; ou le bec (122 ; 222) comprend plusieurs éléments élastiques (146 ; 246) en forme d'arcs de cercle, lesdits éléments élastiques (146 ; 246) étant placés bout-à-bout de sorte à décrire un cercle.

4. Bec de séparation (122 ; 222) selon l'une des revendications 1 à 3, **caractérisé en ce qu'**il comprend une rangée annulaire d'aubes statoriques (26) supportées par la virole externe (128 ; 228).

5. Bec de séparation (122 ; 222) selon l'une des revendications 1 à 4, **caractérisé en ce que** le au moins un élément élastique (146 ; 246) est comprimé radialement entre la paroi de séparation (130 ; 230) et la virole externe ( 128 ; 228) de sorte à plaquer radialement les moyens chauffants (142 ; 242) contre la virole externe (128 ; 228).

6. Bec de séparation (122 ; 222) selon l'une des revendications 1 à 5, **caractérisé en ce que** la virole externe (128 ; 228) et la paroi de séparation (130 ; 230) forment une gorge annulaire (48) s'étendant axialement vers l'aval, les moyens chauffants (142 ; 242) étant placés au fond amont de ladite gorge (48), et/ou les moyens chauffants (142 ; 242) sont en contact de la virole externe (128 ; 228) et de la paroi de séparation.

7. Bec de séparation (122 ; 222) selon l'une des revendications 1 à 6, **caractérisé en ce que** la virole externe (128 ; 228) comprend un matériau composite, préférentiellement à matrice organique.

8. Bec de séparation (122 ; 222) selon l'une des revendications 1 à 7, **caractérisé en ce que** les moyens chauffants (122 ; 222) comprennent une nappe chauffante épousant la paroi de séparation (130 ; 230), et éventuellement la virole externe (128 ; 228), préférentiellement la nappe chauffante comprend une portion plaquée contre la paroi de séparation (130 ; 230), et une portion plaquée contre la virole externe (128 ; 228).

9. Bec de séparation (122 ; 222) selon l'une des revendications 1 à 8, **caractérisé en ce que** le au moins un élément élastique (146 ; 246) comprend un matériau élastomère et/ou forme un bloc de matière élastique.

10. Turbomachine (2) comprenant un bec de séparation (122 ; 222) dégivrant, **caractérisée en ce que** le bec de séparation (122 ; 222) est conforme à l'une des revendications 1 à 9.

11. Méthode d'assemblage d'un bec de séparation (122 ; 222) dégivrant de turbomachine (2), notamment d'un bec de séparation de compresseur basse pression (4);
la méthode étant **caractérisé en ce que**:
le bec de séparation est conforme à l'une des revendications 1 à 9; et
pendant l'assemblage, le au moins un élément élastique (146 ; 246) est comprimé afin de devenir précontraint de sorte à exercer une force F de plaquage des moyens chauffants (142 ; 242) contre la paroi de séparation (130 ; 230).

12. Méthode selon la revendication 11, **caractérisée en ce que** pendant l'assemblage, les moyens chauffants ( 142 ; 242) sont placés dans le bec de séparation (122 ; 222) avant le au moins un élément élastique (46 ; 146 ; 246).

13. Méthode selon l'une des revendications 11 ou 12, **caractérisé en ce que** pendant l'assemblage, le au moins un élément élastique (146 ; 246) est introduit dans le bec de séparation (122 ; 222) puis comprimé, et demeure comprimé dans l'état monté du bec de séparation (122 ; 222).

## Patentansprüche

1. Eine Trenndüse (122; 222) für eine Turbomaschine (2), insbesondere für einen Axialturbomaschinenverdichter (4; 6), wobei die Trenndüse (122; 222) Folgendes umfasst:
- eine ringförmige Trennwand (130; 230) mit einer kreisförmigen Vorderkante (32) und einem inneren ringförmigen Befestigungsflansch (150; 250);
- eine äußere Schale (128; 228) mit einem äußeren Befestigungsflansch (152);
- Heizmittel (142; 242), die so gestaltet sind, dass sie die Trenndüse (122; 222) auftauen können;
- mindestens ein elastisches Element (146; 246) zum Halten der Heizmittel (142; 242) innerhalb der Trennwand (30; 130; 230);
**dadurch gekennzeichnet, dass**
die Trenndüse (122; 222) ein Druckmittel (154; 254) umfasst, das eine Druckspannung auf das mindestens eine elastische Element (146; 246) ausübt, um es vorzuspannen, wobei das Druckmittel (154; 254) einstellbar ist, um die Druckspannung einzustellen, und an dem inneren Befestigungsflansch (150; 250) und dem äußeren Befestigungsflansch (152) befestigt ist; wobei mindestens ein elastisches Element (146; 246) in der Trenndüse (122; 222) vorgespannt ist, um eine Druckkraft F auf die Heizmittel (142; 242) in Richtung der Trennwand (130; 230) auszuüben.

2. Eine Trenndüse (122; 222) nach Anspruch 1, **dadurch gekennzeichnet, dass** das mindestens eine elastische Element (146; 246) und die Heizmittel (142; 242) entlang der Vorderkante (32) angeordnet sind, um die Heizmittel (142; 242) entlang, möglicherweise sogar über die gesamte Länge der Vorderkante (32), bevorzugt kontinuierlich, zu drücken.

3. Eine Trenndüse (122; 222) nach einem der Ansprüche 1 bis 2, **dadurch gekennzeichnet, dass** das mindestens eine elastische Element (146; 246) ringförmig ist; oder dass die Trenndüse (122; 222) eine Vielzahl von elastischen Elementen (146; 246) in Form von Kreisbögen umfasst, wobei die elastischen Elemente (146; 246) Ende an Ende angeordnet sind, um einen Kreis zu beschreiben.

4. Eine Trenndüse (122; 222) nach einem der Ansprüche 1 bis 3, **dadurch gekennzeichnet, dass** sie eine ringförmige Anordnung von Statorschaufeln (26) umfasst, die von der äußeren Schale (128; 228) getragen werden.

5. Eine Trenndüse (122; 222) nach einem der Ansprüche 1 bis 4, **dadurch gekennzeichnet, dass** das mindestens eine elastische Element (146; 246) zwischen der Trennwand (130; 230) und der äußeren Schale (128; 228) radial zusammengedrückt wird, um das Heizmittel (142; 242) radial zur äußeren Schale (128; 228) zu drücken.

6. Eine Trenndüse (122; 222) nach einem der Ansprüche 1 bis 5, **dadurch gekennzeichnet, dass** die äußere Schale (128; 228) und die Trennwand (130; 230) eine sich axial stromabwärts erstreckende Ringnut (48) bilden, wobei das Heizmittel (142; 242) im stromaufwärts gelegenen unteren Teil der Ringnut (48) angeordnet ist und/oder das Heizmittel (142; 242) in Kontakt mit der äußeren Schale (128; 228) und der Trennwand steht.

7. Eine Trenndüse (122; 222) nach einem der Ansprüche 1 bis 6, **dadurch gekennzeichnet, dass** die äußere Schale (128; 228) aus einem Verbundmaterial, vorzugsweise mit einer organischen Matrix, hergestellt ist.

8. Eine Trenndüse (122; 222) nach einem der Ansprüche 1 bis 7, **dadurch gekennzeichnet, dass** das Heizmittel (122; 222) ein Heiztuch umfasst, das mit der Trennwand (130; 230) und optional mit der äußeren Schale (128; 228) verbunden ist, wobei das Heiztuch vorzugsweise einen an die Trennwand (130; 230) gebundenen Teil und einen an die äußere Schale (128; 228) gebundenen Teil umfasst.

9. Eine Trenndüse (122; 222) nach einem der Ansprüche 1 bis 8, **dadurch gekennzeichnet, dass** das mindestens eine elastische Element (146; 246) aus einem elastomeren Material hergestellt ist und/oder einen Block aus elastischem Material bildet.

10. Eine Turbomaschine (2) mit einer Trenndüse (122; 222) zur Enteisung, **dadurch gekennzeichnet, dass** die Trenndüse (122; 222) nach einem der Ansprüche 1 bis 9 gestaltet ist.

11. Ein Verfahren zum Zusammenbau einer Trenndüse (122; 222) zur Enteisung einer Turbomaschine (2), insbesondere einer Trenndüse für einen Niederdruckverdichter (4); wobei das Verfahren **dadurch gekennzeichnet ist, dass**:
die Trenndüse einem der Ansprüche 1 bis 9 entspricht; und
bei der Montage mindestens eine elastische Element (146; 246) vorgespannt wird, um eine Druckkraft F auf das Heizmittel (142; 242) in Richtung der Trennwand (130; 230) auszuüben.

12. Ein Verfahren nach Anspruch 11, **dadurch gekennzeichnet, dass** die Heizmittel (142; 242) bei der Montage vor dem mindestens einen elastischen Element (46; 146; 246) in der Trenndüse (122; 222) befestigt werden.

13. Ein Verfahren nach einem der Ansprüche 11 oder 12, **dadurch gekennzeichnet, dass** während des Zusammenbaus das mindestens eine elastische Element (146; 246) in die Trenndüse (122; 222) eingeführt und dann vorgespannt wird und bleibt, während die Trenndüse (122; 222) zusammengebaut wird.

## Claims

1. Splitter lip (122; 222) for a turbomachine (2), in particular for a compressor (4; 6) of an axial turbomachine (2), the lip (122; 222) comprising:
- an annular splitter wall (130; 230) with a circular leading edge (32), and an annular attachment flange (150; 250);
- an outer shroud (128; 228) with an external fixing flange (152);
- heating means (142; 242) arranged so as to be able to de-ice the splitter lip (122; 222);
- at least one elastic element (146; 246) holding the heating means (142; 242) inside of the splitter wall (30; 130; 230);
**characterized in that**
the splitter lip (122, 222) comprises thrust means (154; 254) exerting a compressive force on the at least one elastic element (146; 246) so as to preload it, the thrust means (154; 254) being adjustable so as to adjust the compressive force and fixed to the annular attachment flange (150; 250) and to the external fixing flange (152), the at least one elastic element (146; 246) being pre-stressed in the splitter lip (122; 222) so as to exert a clamping force F on the heating means (142; 242) towards the splitter wall (130; 230).

2. Splitter lip (122; 222) according to claim 1, **characterized in that** the at least one elastic element (146; 246) and the heating means (142; 242) are arranged along the leading edge (32) so as to clamp the heating means (142; 242) along, possibly all along, the leading edge (32), preferably continuously.

3. Splitter lip (122; 222) according to any of claims 1 and 2, **characterized in that** the at least one elastic element (146; 246) is circular; or the lip (122; 222) comprises multiple elastic elements (46; 146; 246) in the form of arcs of a circle, said elastic elements (146; 246) being disposed end-to-end so as to describe a circle.

4. Splitter lip (122; 222) according to one of claims 1 to 3, **characterized in that** it comprises an annular row of stator vanes (26) supported by the outer shroud (128; 228).

5. Splitter lip (22; 122; 222) according to one of claims 1 to 4, **characterized in that** the at least one elastic element (146; 246) is compressed radially between the splitter wall (130; 230) and the outer shroud (128; 228) so as to clamp the heating means (142; 242) radially against the outer shroud (128; 228).

6. Splitter lip (22; 122; 222) according to one of claims 1 to 5, **characterized in that** the outer shroud (128; 228) and the splitter wall (130; 230) form an annular channel (48) that extends axially in the downstream direction, the heating means (142; 242) being disposed at the upstream end of said channel (48), and/or the heating means (142; 242) are in contact with the outer shroud (128; 228) and the splitter wall.

7. Splitter lip (122; 222) according to one of claims 1 to 6, **characterized in that** the outer shroud (128; 228) comprises a composite material, preferably having an organic matrix.

8. Splitter lip (122; 222) according to one of claims 1 to 7, **characterized in that** the heating means (142; 242) comprise a heating ribbon that fits against the splitter wall (130; 230), and possibly the outer shroud (128; 228), preferably the heating ribbon comprises a portion that is clamped against the splitter wall (130; 230), and a portion that is clamped against the outer shroud (128; 228).

9. Splitter lip (122; 222) according to one of claims 1 to 8, **characterized in that** the at least one elastic element (146; 246) comprises an elastomer material and/or forms a block of elastic material.

10. Turbomachine (2) comprising a de-icing splitter lip (122; 222), **characterized in that** the splitter lip (122; 222) is in accordance with one of claims 1 to 9.

11. Method for assembling a de-icing splitter lip (122; 222) for a turbomachine (2), in particular a splitter lip for a low-pressure compressor (4), the method being **characterized in that**:
the splitter lip is in accordance with one of claims 1 to 9, and
during assembly, the at least one elastic element (146; 246) is compressed such that it is then pre-loaded in order to exert a force F clamping the heating means (142; 242) against the splitter wall (130; 230).

12. Method according to claim 11, **characterized in that**, during assembly, the heating means (142; 242) are disposed in the splitter lip (122; 222) before the at least one elastic element (46, 146; 246).

13. Method according to claim 11 or 12, **characterized in that**, during assembly, the at least one elastic element (146; 246) is introduced into the splitter lip (122; 222) then compressed, and remains compressed in the assembled state of the splitter lip (122; 222).
